# EUROPEAN PATENT SPECIFICATION

(11) **EP 0 459 025 B1**
(45) Date of publication and mention of the grant of the patent: **17.02.1999**
(21) Application number: 90123469.0
(22) Date of filing: 06.12.1990
(51) Int. Cl.: G06K 7/10, H01S 3/02, G02B 26/10

(54) **Scanning system implemented on semiconductor or electro-optical substrate**
Auf einem Halbleiter- oder elektrooptischem Substrat angebrachtes Abtastsystem
Système de balayage réalisé sur un substrat semi-conducteur ou électro-optique

(30) Priority: 29.05.1990 US 530879
(43) Date of publication of application: 04.12.1991
(73) Proprietor: SYMBOL TECHNOLOGIES, INC., Holtsville, NY 11742-1300 (US)
(72) Inventor: Swartz, Jerome, Setauket, NY 11733 (US)
(74) Representative: Wagner, Karl H., Dipl.-Ing.

(56) References cited:
- EP-A- 446 364
- GB-A- 2 175 705
- US-A- 4 360 921
- PATENT ABSTRACTS OF JAPAN vol. 11, no. 171 (E-512)2 June 1987 & JP-A-62 006 575 ( BROTHER IND ) 13 January 1987
- PATENT ABSTRACTS OF JAPAN vol. 12, no. 481 (E-694)15 December 1988 & JP-A-63 199 480 ( SHARP CORP ) 17 August 1988
- PATENT ABSTRACTS OF JAPAN vol. 14, no. 534 (P-1135)26 November 1990 & JP-A-02 226 219 ( CANON INC ) 7 September 1990
- PATENT ABSTRACTS OF JAPAN vol. 10, no. 319 (E-450)30 October 1986 & JP-A-61 129 893 ( OMRON TATEISI ELECTRONICS CO ) 17 June 1986

## Description

### REFERENCE TO RELATED CASES

This application is related to U.S. Patent Application Serial No. 493,134, filed March 13, 1990, said application being assigned to Symbol Technologies, Inc.

### BACKGROUND OF THE INVENTION

### 1. Field of the Invention

This present invention generally relates to laser scanning systems for reading data in the form of indicia such as bar code symbols and, more particularly, to a compact, integrated light source and scanning element implemented on a single semiconductor or electro-optical substrate.

### 2. Description of the Related Art

Various optical readers and optical scanning systems have been developed heretofore for reading bar code symbols appearing on a label or on the surface of an article. The bar code symbol itself is a coded pattern of indicia comprised of a series of bars of various widths spaced apart from one another to bound spaces of various widths, the bars and spaces having different light-reflecting characteristics. A number of different bar code standards or symbologies exist. These symbologies include UPC/EAN, Code 128, Codabar, and Interleaved 2 of 5. The readers and scanning systems electro-optically decode the symbol to multiple alphanumerical characters that are intended to be descriptive of the article or some characteristic thereof. Such characters are typically represented in digital form as an input to a data processing system for applications in point-of-sale processing, inventory control, and the like. Scanning systems of this general type have been disclosed, for example, in U.S. Patent Nos. 4,251,798; 4,360,798; 4,369,361; 4,387,297; 4,409,470 and 4,460,120, all of which have been assigned to the same assignee as the instant application.

As disclosed in some of the above patents, one embodiment of such a scanning system resides, in a device that emits a laser light beam from a hand-held, portable laser scanning head supported by a user, and aiming the head, and more particularly, the laser light beam, at a symbol to be read. The scanner functions by repetitively scanning the laser beam in a line across the symbol. A portion of the reflected laser light which is reflected off the symbol is detected, and electronic circuitry or software decodes the electrical signal into a digital representation of the data represented by the symbol scanned.

More specifically, a scanner includes a light source such as a gas laser or semiconductor laser that generates a light beam. The use of a semiconductor devices as the light source in scanner systems is especially desirable because of their small size, low cost and low power requirements. The light beam is optically modified, typically by a lens, to form a beam spot of a certain size. It is preferred that the beam spot size be approximately the same as the minimum width between regions of different light reflectivity, i.e., the bars and spaces of the symbol. The relative size of the bars and spaces is determined by the type of coding used, as is the actual size of the bars and spaces. The number of characters per inch represented by the bar code symbol is referred to as the density of the symbol.

The light beam is directed by the lens or similar optical components along a light path toward a target that includes a bar code symbol on the surface. A scanning component is also disposed in the light path. The scanning component may either sweep the beam spot across the symbol and trace a scan line across and past the symbol, or scan the field of view of the scanner or do both. A scanner also includes a sensor or photodetector. The photodetector has a field of view which extends across and slightly past the symbol and functions to detect light reflected from the symbol. The analog electrical signal from the photodetector is first typically converted into a pulse width modulated digital signal, with the widths corresponding to the physical widths of the bars and spaces. Such a signal is then decoded according to the specific symbology into a binary representation of the data encoded in the symbol, and to the alphanumeric characters so represented.

The scanning component typically includes a moving mirror, such as a rotating polygon or a planar mirror which is repetively and reciprocally driven in alternate circumferential directions about a drive shaft on which the mirror is mounted. However, the use of mechanical driven mirrors adds to the weight and size of the scanner, and also presents various reliability issues. Such drawbacks have led to consideration of techniques for generating and moving a scanning beam in a single integrated component.

Various approaches for generating a scanning beam by implementing arrays of lasers on a substrate are known in the prior art.

U.S. Patent No. 4,445,125 describes a linear array of injection diode lasers formed on a common substrate to provide modulated scanning beams for a photosensitive medium. A scanning device, preferably a multifaceted mirror polygon driven at a constant speed, is placed in the optical path between the array and the photosensitive medium, as is a focusing lens. To provide additive exposure intensity the plane of the emitting surface of the array is oriented relative to the scanning device so that all of the beams emitted by the array are caused to illuminate the same scan line of the photosensitive medium whereby each beam scans the same data spots on the same line of the photosensitive medium.

U.S. Patent No. 4,462,658 describes an optical scanner with a thin waveguide medium on a substrate includes means to couple a wide collimated beam of radiation into one end of the medium. A periodic array of substantially parallel, spaced electrodes are associated with one major surface of the medium. At least a portion of their electrode lengths extend in a direction substantially parallel with the direction of radiation propagating through the medium. Supply means is provided to apply voltage in a pattern to the electrodes which varies from one electrode to the next adjacent electrode to a predetermined value over several of the electrodes and the same pattern of voltages or a similar pattern of different voltages is applied over several of the next adjacent electrodes up to the predetermined value. In this manner, the pattern is completed across the electrode array to produce an electro-optical effect in which a corresponding approximation of a desired phase retardation along a phase front of the propagating radiation in the medium. Further means are employed to change the magnitude of the applied voltages across the electrode array to vary the approximation of the phase retardation to cause the radiation beam to scan in a direction of radiation propagation in the medium.

Still another approach for deflecting a beam on a substrate also based on the electro-optical effect use devices to direct a laser beam in one or more waveguides on a substrate. Optical waveguides are typically fabricated from a pyroelectric material such as lithium niobate or lithium tantalate or from semiconductor materials such as gallium arsenide or indium phosphide. Wavepaths or waveguides are generally fabricated in the substance by depositing a dopant such as titanium on the surface of the substrate in the pattern desired for the wavepaths. The substrate is then heated to diffuse the dopant into the substrate. This procedure forms wavepaths or waveguides, i.e., a section in the pyroelectric material that guides light, usually about 3 to 10 mu m wide. To permit logic operations, signal processing, or switching between wavepaths in the pyroelectric material, an electric field is imposed across the region of the crystal where a change in beam direction is desired. Such a field is generated by electrodes deposited on the substrate for this purpose. The field produces local changes in the optical polarizability of the crystal, thus locally changing the refractive index and, in turn, altering the path of light through the crystal.

Reference should also be made to publications describing a proposed integrated light source and scan element implemented on a single substrate (1982) and demultiplexes via intensity modulator array which can be used for scanning (1985).

Namely, J.Katz, "Phase Control and Beam Steering of Semiconductor Laser Arrays", TDA Progress Report 42-68, Jan. - Feb. 1982, and D.L. Robinson et al, Monolithically Integrated Array of GaAlAs Electroabsorption Modulators, Electronic Letters, 16th August 1984, Vol. 20 No. 17 pp. 678-680.

With respect to the prior art further attention is drawn to JP-A-63 199 480 from which a semiconductor laser device comprising an optical deflection region formed unitedly on a similar substrate is known. This device further comprises a waveguide part and electric field application means for applying an electric field in order to change a refractive index of the waveguide part.

From JP-A-61 129 893 a light beam deflector is known comprising a bend part in the piezoelectric substrate having electrodes formed on its front and back side. The electrodes are partly processed into a mirror surface.

US-A-4 360 921 teaches a monolithic laser scanning device comprising a semiconductor laser region integral with but spaced from an optical scanning region. By applying a voltage pattern a grating effect is induced due to the influence of the electrode applied electric field which causes the light in a waveguide to deflect.

From EP-A-0 446 364 which constitutes prior art in the sense of Article 54 (3) EPC, a laser scanner for a bar code reader is known, said scanner comprising a substrate and means for generating a laser beam disposed on said substrate. A transparent support is provided which is a lightguide plate through which an outgoing light and a returning signal light are propagated.

The present invention is directed to an integrated laser scanning device and to a method of fabricating an integrated laser scanning device as referred to in independent claims 1 and 9, respectively.

Preferred embodiments of the invention are disclosed in the dependent claims.

Prior to the present invention there has not been an integrated light source and scanning element implemented on a single substrate.

### SUMMARY OF INVENTION

Briefly, and in general terms, the present invention, as defined in Claim 1, provides an integrated laser scanning device including a substrate; means for generating a laser beam disposed on said substrate; and scanning means disposed on said substrate in the path of said laser beam for repetitively and cyclically moving said laser beam so as to form a scanning beam for repetitively scanning a target for reflection therefrom. More particularly, the scanning means comprises a layer of reflective material disposed on said substrate, the plane of said layer being disposed at an acute angle with respect to said laser beam so that said beam is directed along an optical path toward indicia located in the vicinity of a reference plane lying in the optical path so as to scan spatially adjacent portions of the reference plan along a relatively elongated scanning line.

The novel features which are considered as characteristics for the invention are set forth in particular in the appended claims. The invention itself, however, both as to its construction and its method of operation, together with additional objects and advantages thereof will be best understood from the following description of specific embodiments when read in connection with the accompanying drawings.

### BRIEF DESCRIPTION OF THE DRAWING

Fig. 1a and 1b are highly simplified enlarged cross-sectional views of a portion of two different semiconductor structures for implementing a semiconductor laser portion of the device according to the present invention;
Fig. 2 is a highly simplified diagrammatic perspective view of the semiconductor structure according to a first embodiment of the present invention;
Fig. 3 is a high simplified diagrammatic perspective view of a the semiconductor structure according to a second embodiment of the present invention;
Fig. 4 is a high simplified diagrammatic cross-sectional view of a hand-held scanner incorporating the semiconductor structure according to the present invention; and
Fig. 5 is a highly simplified block diagram perspective view of a semiconductor device according to a third embodiment of the present invention.

### DESCRIPTION OF THE PREFERRED EMBODIMENT

The present invention generally relates to laser scanning systems for reading data in the form of indicia such as bar code symbols and, more particularly, to a compact, integrated light source and scanning element implemented on a single semiconductor or electro-optical substrate.

As used in this specification and the following claims, the term "symbol" and "bar code" is intended to be broadly construed and to cover not only patterns composed of alternating bars and spaces of various widths, but also other one or two dimensional graphic patterns, as well as alphanumeric characters.

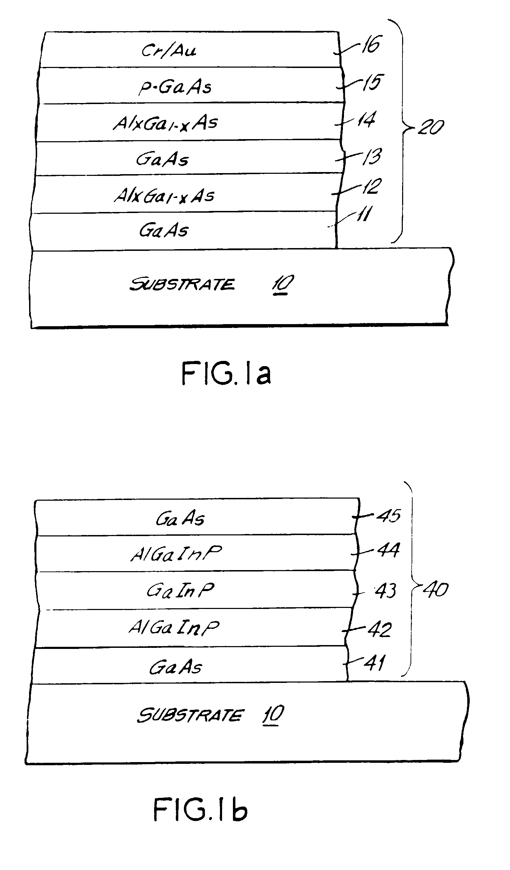

Referring first to Figure 1, there is shown in Fig. 1a and 1b two different embodiments of a semiconductor structure for implementing a semiconductor laser in accordance with the present invention.

The starting point of fabricating the semiconductor structure according to the present invention is to provide a semi-insulating crystal substrate 10, preferably composed of gallium arsenide (GaAs) oriented in the 100 direction. An electrical contact (not shown) may be applied to the substrate to provide one of the electrical contacts to the device.

The following description focuses on the growth and deposition of the semiconductor structure as is known in the art. The layers are grown sequentially on the substrate 10 according to molecular beam epitaxy techniques known in the art, although any other suitable deposition technique could be used as well, such as vapor phase epitaxy, e.g., metal organic chemical vapor deposition. The first embodiment will be described with reference to Fig. 1a, and the second embodiment with reference to Fig. 1b.

Turning to Fig. 1a, there is shown a multiple layer structure 20 on the substrate 10 that provides an active region or layer bounded by upper and lower clad layers. For laser or highly efficient light emitting operation, it is necessary that the electromagnetic radiation produced in the active region remains mainly in the active region. Thus, the active layer is situated between two clad layers having a lower refractive index than the active region.

A first layer 11 of undoped gallium arsenide is deposited on the substrate 10 to serve as a buffer layer. The thickness of the first layer 11 is preferably in excess of 1 micron. In some cases it may be desireable to have an interface between the substrate 10 and the first layer 11.

A second layer 12 of undoped A1ₓGa₁₋ₓAs semiconductor material having a thickness of greater than one micron is then deposited on the first layer 11 to form a first cladding layer. The cladding layer 11 is selected so as to have a larger bandgap energy and smaller optical refraction index than the active layer.

A semiconductor laser active region 13 is then deposited on the second layer 12 to form the active region of the device. In the preferred embodiment of a double heterostructure (DH) laser, the laser active region 13 may itself be composed of a single layer of GaAs, or in other embodiments the active region 13 may be a sequence of three layers (A1ₓ Ga₁₋ₓAs, GaAs, and A1ₓGa₁₋ₓAs) or more, in a quantum well embodiment.

As an example in case the active region 13 is composed of three layers, the growth of the first A1ₓGa₁₋ₓAs layer begins with an aluminum fraction x between 10% and 50% adjacent to the clad layer 12 and grades down to a composition of 0% aluminum at the surface of the GaAs layer. The purpose of this layer is to provide optical wave-guiding in the semiconductor laser. As is well known to those skilled in the semiconductor laser art, the exact composition profile of the wave-guiding layer is not critical provided that the overall thickness of the wave-guiding structure is such as to support a single optical mode between the two waveguiding layers. The third layer of A1ₓGa₁₋ₓAs begins at a composition of 0% aluminum at the surface of the GaAs layer, and increases to 50% at the top surface.

Carrier recombination occurs in active region 13 relative to the heterostructure p-n junction established between layers 12 and 14. Upon application of pumping current I via the electrodes associated with the device, a radiation propagating cavity is established in active region 13 with resonator feedback provided by the mirror facets (not shown). The radiation is produced in the active region 13 by carrier recombination, and the radiation propagates in a cavity parallel to the elongated extent of the upper electrode.

The mirror facets may be provided with additionally deposited mirrors, such as dielectric stack mirrors, or etched mirrors as are known in the art.

Another layer 14 of A1ₓGa₁₋ₓAs semiconductor material in deposited on the region 13 to form the second cladding layer. The second cladding layer has a larger bandgap energy and smaller optical refraction index than the active region 13.

The contact layer 15 is epitaxially grown on top of layer 14 and may preferably be p-type GaAs to facilitate making ohmic contact to the electrode 16. The electrode 16 is formed by depositing a layer of metal, typically chrome-gold, on top of layer 15.

Turning to Fig. 1b, there is shown another embodiment of a multiple layer structure 40 on the substrate 10 that provides an active layer bounded by upper and lower clad layers. For laser or highly efficient light emitting operation, it is necessary that the electromagnetic radiation produced in the active region remains mainly in the active region. Thus, the active layer is situated between two clad layers having a lower refractive index than the active region.

A first layer 41 of undoped gallium arsenide is deposited on the substrate 10 to serve as a buffer layer. The thickness of the first layer 41 is preferably in excess of one micron.

A second layer 42 of undoped A1ₓGaInP semiconductor material having a thickness of greater than one micron is then deposited on the first layer 41 to form a first cladding layer. The cladding layer 42 is selected so as to have a larger bandgap energy and smaller optical refraction index than the active layer.

A semiconductor laser active region 43 is then deposited on the second layer 42 to form the active region of the device. In the preferred embodiment of a double heterostructure (DH) laser, the laser region 43 may itself be composed of a sequence of three layers.

Carrier recombination occurs in active region 43 relative to the heterostructure p-n junction established between layers 42 and 44. Upon application of pumping current I by means of the electrodes, a radiation propagating cavity is established in active layer 43 with resonator feedback provided by the mirror facets (not shown). The radiation produced in the active region 43 by carrier recombination propagating (arrow) in a cavity parallel to the elongated extent of electrode.

The mirror facets may be provided with additionally deposited mirrors, such as dielectric stack mirrors, or etched mirrors as are known in the art.

The contact layer 45 is epitaxially grown on top of layer 44 and may preferably be p-type GaAs to facilitate making ohmic contact to the upper electrode (not shown). The electrode may be formed by depositing a layer of metal, typically chrome-gold, on top of layer 45.

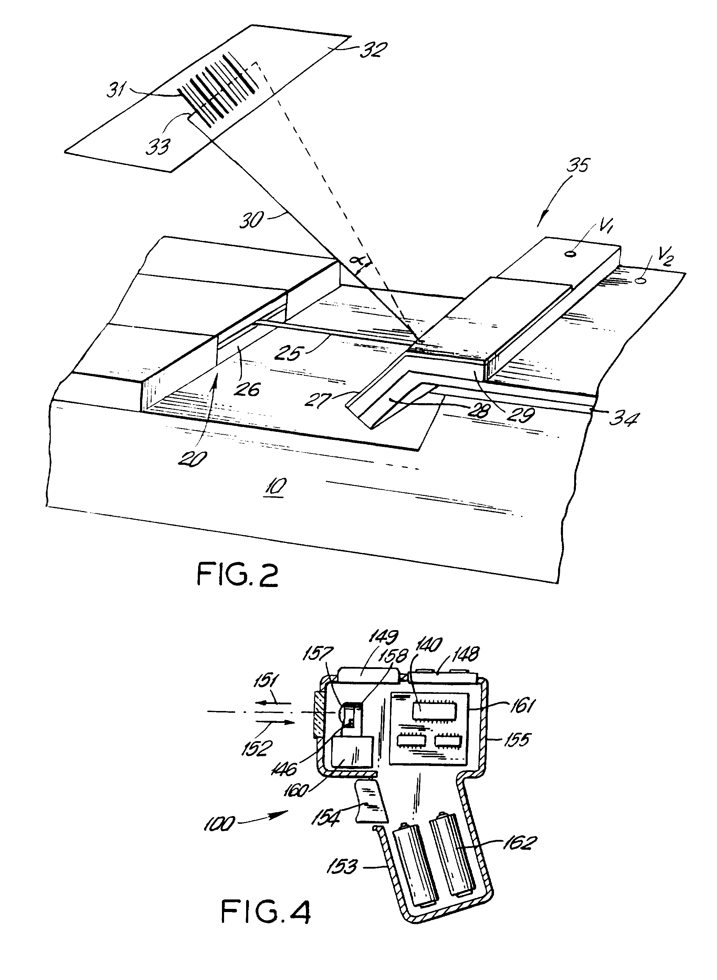

Referring to Figure 2, there is shown a highly simplified perspective view of a semiconductor structure according to a first embodiment of the present invention in which the basic elements of a bar code reader may be implemented.

The substrate 10 includes a first portion including a multiple layer structure 20, i.e., a semiconductor laser diode, which when energized, generates a laser beam 25 which is emitted from an edge 26 of the light structure 20. Although the use of reference numeral 20 in Fig. 2 suggests the use of the structure 20 of Fig. 1a, the use of structure 40 of Fig. 1b or yet other structures may be used as well.

The structure 20 generates a laser beam which is propagated through free space to a reflective structure 35 implemented on the substrate 10. The beam 25 is more particularly directed to a reflective surface 27 which is moved or reciprocated by means to be explained subsequently. The movement of the surface 27 causes the laser beam 25 to be deflected, so as to produce a scan line or other pattern across a symbol 31 disposed on the surface 32 of a target in the path of the reflected beam.

In the preferred embodiment, the reflective surface 27 is a layer applied to the top of a piezoelectric composite, 28, 29 disposed on the substrate 10. The composite consists of two layers of a piezoelectric material responsive to an enabling electrical signal. A soft, pliable layer 34 of interface material, such as a glass composition, is applied to the surface of the substrate 10. The layer 28 which is the first layer of piezoelectric is applied to the layer 34 and the second layer of piezoelectric material 29 is applied on top of the layer 28. The layer 34 permits the layers 28 and 29 to move with respect to one another without transmitting such stresses to the substrate 10. An electrode V1 is connected to the layer of piezoelectric 29, and electrode V2 is connected to the layer of piezoelectric material 28. The layers of piezoelectric material preferably comprise lead zirconate and lead titanate, also known as PZT.

When an electric current is applied to the electrodes V1 and V2 the relative position of the layers 28 and 29 move as is known in the art, which results in a deflection of the reflective surface 29. The electric signals applied to the electrodes V1 and V2 therefore function to repetitively and cyclically changing the position of the reflective element in the path of the laser beam 25 so as to transform the laser beam 25 into a scanning beam 30 for repetitively scanning the target 32 for reflection therefrom.

The plane of the layer of the reflective surface is disposed at an acute angle with respect to the laser beam 25 so that the beam is directed along an optical path toward indicia 31 located in the vicinity of a reference plane 32 lying in the optical path so as to scan spatially adjacent portions of the reference plane 32 along a relatively elongated scanning line 33.

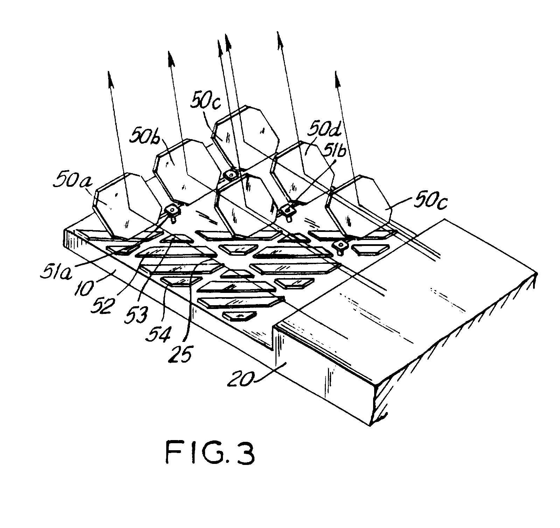

Referring next to Fig. 3 there is shown a highly simplified perspective view of a semiconductor structure according to a second embodiment of the present invention. As in Fig. 2, the structure consists of a substrate 10 including a first portion consisting of a multiple layer structure 20, i.e., a semiconductor laser diode, which when energized, generates a laser beam 25.

The beam 25 is directed to a plurality of reflective surfaces 50a, 50b, 50c, 50d, 50e, etc., which are implemented on the surface of the substrate 10. More particularly the reflective elements 50a, 50b, etc., are micromirrors which are attached to support posts 51a, 51b, etc., on the surface of the substrate 10. The mirror surfaces 50a, 50b, etc., lie over and spaced apart from a pattern of control electrodes 52, 53, 54, etc., which are repetively and cyclically energized so as to cause the mirror surfaces 50a, 50b, etc., to rotate on the pivot posts 51a, 51b, etc. The rotation of the mirror surfaces through a relatively small angle results in the laser beam striking the surface of the mirror surfaces being deflected as is shown in the reflected beams. The movement of the laser beam 25 produces a scan line of other pattern across a symbol 31 disposed on a target in the path of the reflected beam.

The arrangement according to the present invention may be packaged in an integrated circuit package with a window for the emitted laser beam and implemented on a printed circuit (PC) board with other electronic components. Such PC board may be packaged in a hand-held scanner, a desktop workstation or stationery scanner. In a preferred embodiment, the arrangement would be implemented in a housing that includes an exit port through which an outgoing laser light beam 30 is directed to impinge on, and to be scanned across, symbols 31 located on a target 32 situated exterior of the housing.

Before describing the third embodiment of the present invention, it is worthwhile to illustrate the packaging or implementation of the arrangement according to the present invention.

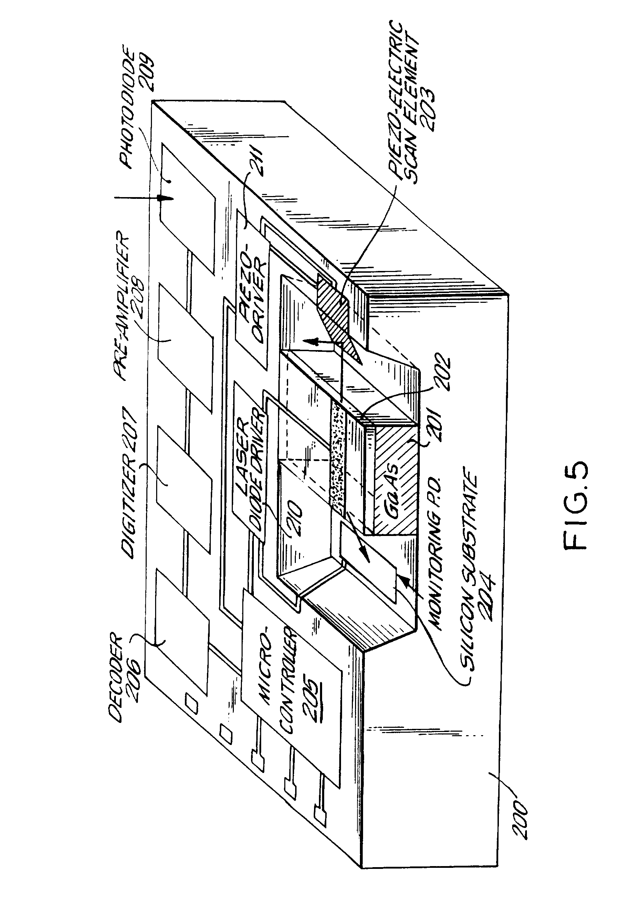

As an example of such an embodiment, we described the implementation of the present invention in a hand-held, laser-scanning, bar code reader unit such as illustrated in Figure 4. This hand-held device of Figure 4 is generally of the style disclosed in U.S. Patent 4,760,248, issued to Swartz et al, assigned to Symbol Technologies, Inc., and also similar to the configuration of a bar code reader commercially available as part number LS 8100 or LS 2000 from Symbol Technologies, Inc. Alternatively, or in addition, features of U.S. Patent 4,387,297 issued to Swartz et al, or U.S. Patent 4,409,470 issued to Shepard et al, both such patents assigned to Symbol Technologies, Inc., may be employed in constructing the bar code reader unit of Figure 4.

The operation of such a unit may be described as follows: An outgoing light beam 151 is generated in the reader 100, usually by a laser diode or the like, and directed to impinge upon a bar code symbol spaced at a distance from the front of the reader unit. The outgoing beam 151 is scanned in a fixed linear pattern, and the user positions the hand-held unit so this scan pattern traverses the symbol to be read. Reflected light 152 from the symbol is detected by a light-responsive device 146 in the reader unit, producing serial electrical signals to be processed for identifying the bar code. The reader unit 100 is a gun shaped device, having a pistol-grip type of handle 153 and movable trigger 154 is employed to allow the user to activate the light beam 151 and detector circuitry when pointed at the symbol to be read, thereby saving battery life if the unit is self-powered. A light-weight plastic housing 155 contains the laser light source, the detector 146, the optics and signal processing circuitry, and the CPU 140 as well as a battery 162. A light-transmissive window 156 in the front end of the housing 155 allows the outgoing light beam 151 to exit and the incoming reflected light 152 to enter. The reader 100 is designed to be aimed at a bar code symbol by the user from a position where the reader 100 is spaced from the symbol, i.e., not touching the symbol or moving across the symbol. Typically, this type of hand-held bar code reader is specified to operate in the range of perhaps several inches.

As seen in Figure 4, a suitable lens 157 (or multiple lens system) is used to collimate and focus the scanned beam into the bar code symbol at an appropriate reference plane, and this same lens 157 may be used to focus the reflected light 152. A scanning light source 158 such as a semiconductor device according to the present invention is positioned to introduce a light beam into the axis of the lens 157 by appropriate beam-shaping structure needed, when the trigger 154 is pulled. If the light produced by the source 158 is not visible, an aiming light may be included in the optical system to introduce the beam into the light path coaxially with the lens 157. The aiming light, if needed, produces a visible-light spot which is scanned just like the laser beam; the user may employ this visible light to aim the reader unit at the symbol before pulling the trigger 154 to activate the scanning.

Turning to Fig. 5, there is shown another embodiment of the present invention in which an entire scanner is implemented on a silicon substrate. A silicon substrate 200 is provided which includes a layer 201 composed of GaAs on a portion of the surface thereof. On top of the layer 201 is a sequence of layers 202 which form a semiconductor laser such as shown in Fig. 1a and 1b. The output laser beam from the semiconductor laser is directed to a piezoelectric scan element 203 which is also implemented on the surface of the silicon substrate 200 in accordance with the present invention. The scan element 203 may be similar to that of the composite 28, 29 described in Figure 2.

A number of additional elements of the scanner may also be implemented on the same silicon substrate 200 as is shown in the Figure. For example, a monitoring photodiode 204 may be implemented on the silicon substrate to measure the output of the semiconductor laser 202. An integrated circuit microcontroller 205 may also be implemented on the same surface of the silicon substrate 200, along with a decoder 206, digitizer 207, preamplifier 208, photodiode 209, laser diode driver 210, and piezoelectric scan element driver 211. All such units may be connected by means of bus electrodes 212 implemented on the surface of the chip. Contact pads 213 as is known in the art may be implemented on the periphery of the substrate 200 for connection to external wires and for packaging the integrated circuit into a package.

Although the present invention has been described with respect scanners for reading linear or single line bar codes, it is not limited to such embodiments, but may also be applicable to more complex scanning patterns and to stacked or two dimensional bar codes such as Code 49 and similar symbologies. It is conceivable that the method of the present invention may also find application for use with various machine vision or optical character recognition applications in which information is derived from other types of indicia such as characters or from the surface characteristics of the article being scanned.

In all of the various embodiments, the elements of the scanner may be assembled into a very compact IC package or module. Such a package or module can interchangeably be used as the laser scanning element for a variety of different types of data acquisition systems. For example, the module may be alternately plugged in and used in a hand-held scanner, a table top scanner attached to a flexible arm or mounting extending over the surface of the table or attached to the underside of the table top, or mounted as a subcomponent or subassembly of a more sophisticated data acquisition system.

The scanning module described above may also be implemented within a self-contained data acquisition system including one or more such components as keyboard, display, data storage, application software, and data bases. Such a system may also include a communications interface to permit the data acquisition system to communicate with other components of a local area network or with the telephone exchange network, either through a modem or an ISDN interface, or by low power radio broadcast from the portable terminal to a stationary receiver.

It will be understood that each of the features described above, or two or more together, may find a useful application in other types of scanners and bar code readers differing from the types described above.

While the invention has been illustrated and described as embodied in a scanning system implemented on a semiconductor or electro-optical substrate, it is not intended to be limited to the details shown, since various modifications and structural changes may be made.

Without further analysis, the foregoing will so fully reveal the gist of the present invention that others can readily adapt it for various applications without omitting features that, from the standpoint of prior art fairly constitute essential characteristics of the generic of specific aspects of this invention and, therefore, such adaptions should and are intended to be comprehended within the meaning and range of equivalence of the following claims:

## Claims

1. An integrated laser scanning device comprising:
a substrate (10) composed of semiconductor or electro-optical material,
means (20) disposed on said substrate (10) for generating a laser beam (25), and
scanning means disposed on said substrate (10) in the path of said laser beam (25) responsive to an enabling electrical signal,
characterized in that
said scanning means comprises a micromirror with a planar reflective surface (27) disposed on a scan means (203) which functions as mirror position changing means and which is disposed on said substrate (10), or a micromirror (50a-50d) with a planar reflective surface rotatably attached to a pivot support post (51a, 51b) functioning as mirror position changing means and formed on said substrate (10), wherein the respective micromirror is disposed such that the corresponding reflective surface of the micromirror forms an acute angle with respect to the laser beam (25) and wherein the position of the micromirror can be repetitively and cyclically changed in response to said enabling signal by said mirror position changing means so as to transform said laser beam (25) into a scanning beam for repetitively scanning a target (32) for reflection therefrom.

2. A device as defined in claim 1, wherein said scan means (203) comprises a first and second layer (28, 29) of a piezoelectric material responsive to said enabling signal.

3. A device as defined in claim 2, wherein said piezoelectric material comprises lead zirkonate and lead titanate.

4. A device as defined in claim 1, wherein said means for generating a laser beam comprises a semiconductor laser.

5. The device as defined in claim 1, wherein said mirror position changing means is adapted to reciprocate said reflective surface (27).

6. The device as defined in claim 1, wherein said mirror position changing means is adapted to move said reflective surface (27).

7. The device as defined in claim 1, wherein said mirror position changing means is adapted to deflect said reflective surface (27).

8. The device as defined in claim 2 or 3, wherein the reflective surface (27) is a layer applied to the top of said mirror position changing means.

9. A device as defined in claims 2, 3 or 8, wherein a soft pliable layer (34) of interface material is disposed between the surface of said substrate (10) and said layers (27, 28) of piezoelectric material.

10. A device as defined in claim 1, wherein the scanning means comprises a micromirror mounted on said substrate by a pivot and wherein the scanning means further comprises electrodes operatively associated with said mirror so that said scanning means is responsive to said enabling electrical signal on said electrodes for changing the position of said micromirror so as to change the direction of the laser beam reflected therefrom.

11. A device as defined in claim 10, wherein said micromirror is a flat square shaped metallic sheet pivoted at two opposed corners.

12. A method of fabricating an integrated laser scanning device as defined in claim 1, comprising the steps of:
providing a substrate (10) composed of semiconductor or electro-optical material;
forming a first structure (20) on said substrate (10) for generating a laser beam (25);
forming a second structure (35) on said substrate (10), said second structure comprising a micromirror with a planar reflective surface disposed on said substrate, or a planar reflective surface micromirror (50a-50d) rotatably attached to a pivot support post (51a, 51b) formed on said substrate,
wherein the respective micromirror on the substrate is disposed such that the mirror lies in the path of said laser beam (25) and the corresponding reflective surface of the mirror forms an acute angle with respect to the laser beam (25) so that the position of the mirror can be repetitively and cyclically changed in response to said enabling electrical signal for repetitively scanning said target (32) for reflection therefrom.

13. A method as defined in claim 12, wherein the step of forming said second structure (35) comprises
depositing first and second layers of a piezoelectric material and a layer of reflective material on said substrate (10) such that the position of the reflective material can be changed in response to said enabling electrical signal so as to direct the laser beam (25) along a scanning line.

## Patentansprüche

1. Integrierte Laserabtasteinrichtung, die folgendes aufweist:
ein Substrat (10), das aus einem Halbleitermaterial oder elektrooptischen Material besteht,
Mittel (20), die auf dem Substrat (10) zur Erzeugung eines Laserstrahls (25) angeordnet sind, und
Abtastmittel, die auf dem Substrat (10) im Weg des Laserstrahls (25) angeordnet sind, ansprechend auf ein elektrisches Freigabesignal,
dadurch gekennzeichnet, daß
die Abtastmittel folgendes aufweisen:
einen Mikrospiegel mit einer planaren reflektierenden Oberfläche (27), angeordnet auf Abtastmitteln (203), welche als Spiegelpositionsänderungsmittel dienen und welche auf dem Substrat (10) angeordnet sind, oder einen Mikrospiegel (50a - 50d) mit einer planaren reflektierenden Oberfläche, der drehbar an einen Schwenkunterstützungspfosten (51a, 51b) angebracht ist, der als Spiegelpositionieräderungsmittel dient und auf dem Substrat (10) gebildet ist, wobei der entsprechende Mikrospiegel so angeordnet ist, daß die entsprechende reflektierende Oberfläche des Mikrospiegels einen spitzen Winkel bezüglich des Laserstrahls (25) bildet, und wobei die Position des Mikrospiegels wiederholt und zyklisch verändert werden kann, ansprechend auf das Freigabesignal durch die Spiegelpositionsänderungsmittel, um den Laserstrahl (25) in einen Abtaststrahl umzuformen, und zwar zum wiederholten Abtasten einer Probe bzw. eines Ziels (target) auf von ihr bzw. von ihm stammender Reflexion.

2. Einrichtung nach Anspruch 1, wobei die Abtastmittel (203) eine erste und zweite Schicht (28, 29) eines piezoelektrischen Materials aufweisen, ansprechend auf das Freigabesignal.

3. Einrichtung nach Anspruch 2, wobei das piezoelektrische Material Bleizirkonat und Bleititanat aufweist.

4. Einrichtung nach Anspruch 1, wobei die Mittel zum Erzeugen eines Laserstrahls einen Halbleiterlaser aufweisen.

5. Einrichtung nach Anspruch 1, wobei die Spiegelpositionsänderungsmittel geeignet sind, die reflektierende Oberfläche hin und her zu bewegen.

6. Einrichtung nach Anspruch 1, wobei die Spiegelpositionsänderungsmittel geeeignet sind, um die reflektierende Oberfläche (27) zu bewegen.

7. Einrichtung nach Anspruch 1, wobei die Spiegelpositionsänderungsmittel geeignet sind, um die reflektierende Oberfläche (27) auszulenken.

8. Einrichtung nach Anspruch 2 oder 3, wobei die reflektierende Oberfläche (27) eine auf den Spiegelpositionsänderungsmitteln aufgebrachte Schicht ist.

9. Einrichtung nach Anspruch 2, 3 oder 8, wobei eine weiche, nachgiebige Schicht (34) eines Schnittstellenmaterials zwischen der Oberfläche des Substrats (10) und den Schichten (27, 28) aus piezo-elektrischen Material angeordnet ist.

10. Einrichtung nach Anspruch 1, wobei die Abtastmittel einen Mikrospiegel aufweisen, der auf dem Substrat durch eine Drehachse (pivot) angebracht ist, und wobei die Abtastmittel weiterhin Elektroden aufweisen, die betriebsmäßig mit dem Spiegel verbunden sind, so daß die Abtastmittel auf das elektrische Freigabesignal ansprechen, und zwar auf den Elektroden zum Ändern der Position des Mikrospiegels, um die Richtung des Laserstrahls, der von ihm reflektiert wird, zu ändern.

11. Einrichtung nach Anspruch 10, wobei der Mikrospiegel eine flache quadratisch geformte metallisches Flächenelement (Scheibe) ist, die an zwei gegenüberliegenden Ecken geschwenkt ist.

12. Verfahren zum Herstellen einer integrierten Laserabtasteinrichtung nach Anspruch 1, das folgende Schritte aufweist:
Vorsehen eines Substrats (10), das aus Halbleitermaterial oder elektrooptischem Material besteht;
Bilden einer ersten Struktur (20) auf dem Substrat (10) zum Erzeugen eines Laserstrahls (25);
Bilden einer zweiten Struktur (35) auf dem Substrat (10), wobei die zweite Struktur folgendes aufweist:
einen Mikrospiegel mit einer planaren reflektierenden Oberfläche, die auf dem Substrat angeordnet ist, oder einen planaren reflektiven Oberflächen-Mikrospiegel (50a - 50d), der drehbar an einem Schwenkunterstützungspfosten (51a, 51b) angebracht ist, der auf dem Substrat gebildet ist, wobei der entsprechende Mikrospiegel auf dem Substrat so angeordnet ist, daß der Spiegel im Weg des Laserstrahls (25) liegt, und die entsprechende reflektierende Oberfläche des Spiegels einen spitzen Winkel bezüglich des Laserstrahls (25) bildet, so daß die Spiegelposition wiederholt und zyklisch ansprechend auf das elektrische Freigabesignal geändert werden kann, und zwar zum wiederholten Abtasten der Probe (32) mit von ihr stammender Reflexion.

13. Verfahren nach Anspruch 12, wobei der Schritt des Bildens der zweiten Struktur (35) ein Ablagern erster und zweiter Schichten eines piezoelektrischen Materials und einer Schicht eines reflektierenden Materials auf dem Substrat (10) aufweist, und zwar so, daß die Position des reflektierenden Materials verändert werden kann ansprechend auf das elektrische Freigabesignal, um den Laserstrahl (25) entlang einer Abtastzeile zu führen bzw. zu richten.

## Revendications

1. Dispositif de balayage à laser intégré comprenant :
un substrat (10) composé d'un matériau semi-conducteur ou électro-optique,
un moyen (20) disposé sur ledit substrat (10) pour générer un faisceau laser (25), et
un moyen de balayage disposé sur ledit substrat (10) dans le trajet dudit faisceau laser (25) sensible à un signal électrique de validation,
caractérisé en ce que
ledit moyen de balayage comprend un micro-miroir avec une surface réfléchissante plane (27) disposé sur un moyen d'exploration (203) qui fonctionne comme moyen de changement de position du miroir et qui est disposé sur ledit substrat (10), ou un micro-miroir (50a-50d) avec une surface réfléchissante plane fixé de manière pivotante à un montant de support pivot (51a, 51b) fonctionnant comme moyen de changement de position du miroir et formé sur ledit substrat (10), le micro-miroir respectif étant disposé de manière telle que la surface réfléchissante correspondante du micro-miroir forme un angle aigu par rapport au faisceau laser (25) et la position du micro-miroir pouvant être changée de manière répétitive et cyclique en réponse audit signal de validation par ledit moyen de changement de position du miroir de manière à transformer ledit faisceau laser (25) en un faisceau de balayage pour explorer de manière répétitive une cible (32) pour être réfléchi à partir de cette dernière.

2. Dispositif selon la revendication 1, dans lequel ledit moyen d'exploration (203) comprend des première et seconde couches (28, 29) d'un matériau piézo-électrique sensible audit signal de validation.

3. Dispositif selon la revendication 2, dans lequel le matériau piézo-électrique comprend du zirconate de plomb et du titanate de plomb.

4. Dispositif selon la revendication 1, dans lequel ledit moyen pour générer un faisceau laser comprend un laser à semi-conducteur.

5. Dispositif selon la revendication 1, dans lequel ledit moyen de changement de position du miroir est adapté pour animer ladite surface réfléchissante d'un mouvement de va-et-vient.

6. Dispositif selon la revendication 1, dans lequel ledit moyen de changement de position du miroir est adapté pour faire se mouvoir ladite surface réfléchissante (27).

7. Dispositif selon la revendication 1, dans lequel ledit moyen de changement de position du miroir est adapté pour dévier ladite surface réfléchissante (27).

8. Dispositif selon la revendication 2 ou 3, dans lequel la surface réfléchissante (27) est une couche appliquée au sommet dudit moyen de changement de position du miroir.

9. Dispositif selon la revendication 2, 3 ou 8, dans lequel une matière pliable molle (34) d'un matériau d'interface est disposée entre la surface dudit substrat (10) et lesdites couches (27, 28) de matériau piézo-électrique.

10. Dispositif selon la revendication 1, dans lequel ledit moyen de balayage comprend un micro-miroir monté sur ledit substrat au moyen d'un pivot et dans lequel ledit moyen de balayage comprend de plus des électrodes opérationnellement associées audit miroir de manière que ledit moyen de balayage soit sensible audit signal électrique de validation sur lesdites électrodes pour changer la position dudit micro-miroir de manière à changer la direction du faisceau laser réfléchi à partir de ce dernier.

11. Dispositif selon la revendication 10, dans lequel ledit micro-miroir est une feuille métallique plate façonnée en carré pivotant à deux angles opposés.

12. Procédé de fabrication d'un dispositif de balayage à laser intégré selon la revendication 1, comprenant les étapes consistant à:
Fournir un substrat (10) composé de matériau semi-conducteur ou électro-optique;
former une première structure (20) sur ledit substrat (10) pour générer un faisceau laser (25);
former une seconde structure (35) sur ledit substrat (10), ladite seconde structure comprenant un micro-miroir avec une surface réfléchissante plane disposé sur ledit substrat, ou une surface réfléchissante plane (50a-50d) fixée de manière pivotante sur un montant de support pivot (5la, 51b) formé sur ledit substrat,
procédé dans lequel le micro-miroir respectif sur le substrat est disposé de manière telle que le miroir se trouve dans le trajet dudit faisceau laser (25) et que la surface réfléchissante correspondante du miroir forme un angle aigu par rapport au faisceau laser (25) si bien que la position du miroir peut être changée de manière répétitive et cyclique en réponse audit signal électrique de validation pour explorer de manière répétitive ladite cible (32) pour une réflexion à partir de cette dernière.

13. Procédé selon la revendication 12, dans lequel l'étape consistant à former ladite seconde structure (35) comprend le dépôt de première et seconde couches d'un matériau piézo-électrique et d'une couche de matériau réfléchissant sur ledit substrat (10) de manière que la position du matériau réfléchissant puisse être changée en réponse audit signal électrique de validation afin de diriger le faisceau laser (25) le long d'une ligne de balayage.
